# EUROPÄISCHE PATENTANMELDUNG

(11) **EP 0 648 809 A1**
(43) Veröffentlichungstag der Anmeldung: **19.04.1995**
(21) Anmeldenummer: 94115349.6
(22) Anmeldetag: 29.09.1994
(51) Int. Cl.: C08L 67/00, D01F 6/92

(54) **Pillarme und schwer entflammbare Mischungen aus einem Phosphor und einem Silizium enthaltenden Polyester**

(30) Priorität: 09.10.1993 DE 4334492
(71) Anmelder: HOECHST AKTIENGESELLSCHAFT, D-65929 Frankfurt am Main (DE)
(72) Erfinder: Freudenberger, Volker, Dr., D-65719 Hofheim (DE); Klein, Peter, Dr., D-65205 Wiesbaden (DE); Kleiner, Hans-Jerg, Dr., D-61476 Kronberg (DE)

(57) **Zusammenfassung**

Beschrieben werden pillarme und schwer entflammbare Phosphor und Silizium enthaltende Polyester-Mischungen die
zu 10 bis 90 Gew.-% aus einem phosphorhaltigen Polyester A, zu 90 bis 10 Gew.-% aus einem siliziumhaltigen Polyester B und
zu 0 bis 80 Gew.-% aus einem unmodifizierten Polyester C besteht, wobei
der Polyester A durch Zusatz von Verbindungen der Formel I modifiziert ist, 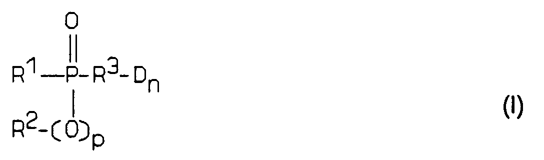
und der Polyester B durch Zusatz von Verbindungen der Formeln II oder III modifiziert ist, 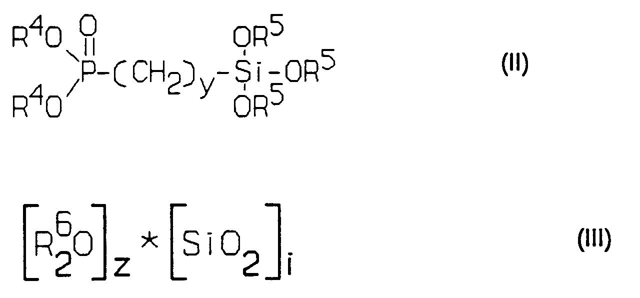
wobei in den Formeln I, II und III
R¹ und R² gleich oder verschieden sind und jeweils einen einbindigen Kohlenwasserstoffrest oder gemeinsam einen zweibindigen Kohlenwasserstoffrest bedeuten,
R³ für einen (n + 1)-valenten organischen Rest steht,
D für eine zur Esterbildung befähigte Gruppe,
R⁴, R⁵ und R⁶ gleich oder verschieden sind und jeweils Wasserstoff oder einen einbindigen Kohlenwasserstoffrest bedeutet und die Indices
n für 1 bis 3, p für 0 oder 1, y für 1 bis 10 ist, z für 0 oder eine ganze Zahl von 1 bis 2*i und i für eine ausreichend kleine ganze Zahl stehen.

Ferner werden Verfahren zur Herstellung dieser Polyester-Mischungen und deren Verwendung beschrieben.

## Beschreibung

Die vorliegende Erfindung betrifft Mischungen aus modifizierten synthetischen linearen faserbildenden Polyestern mit verbessertem Brand- und Pillverhalten, Verfahren zu ihrer Herstellung sowie daraus geformte Gebilde, insbesondere pillarme und schwer entflammbare Fasern aus diesen Polyester-Mischungen.

Fasern aus den üblichen synthetischen linearen faser- und filmbildenden Polyestern, vor allem diejenigen der Terephthalsäure, wie Polyethylenterephthalat, Polybutylenterephthalat und deren Copolyester sind von Haus aus für die meisten Einsatzgebiete ausreichend schwerentflammbar. Auf einigen Sektoren entspricht dieses inhärente Brandverhalten aber nicht den Anforderungen. Es hat daher nicht an Versuchen gefehlt, die Brennbarkeit von Polyesterfasern z.B. durch nachträgliches Ausrüsten am fertigen Textil, durch Zumischen von Brandschutzkomponenten zur Polyesterschmelze oder durch eine chemische Modifizierung des Polyestermoleküls zu verbessern. Für die chemische Modifizierung sind mannigfaltige Vorschläge gemacht worden, von denen sich letztlich aber nur die Modifizierung mit in das Polyestermolekül einbaubaren Phosphorverbindungen in der Praxis durchgesetzt hat.
Solche Phosphorverbindungen sind z.B. in den Patentschriften DE-C-2 346 787, DE-C-2 646 218 und JP 5 2144-627 aufgeführt. Fasern aus diesen schwerentflammbaren, linearen Polyestern sind selbstverlöschend und erfüllen die von verschiedenen Ländern für den textilen Brandschutz erlassenen Brandnormen.

Als gewisser Nachteil, zumal im Bereich feinerer Titer, ist bei diesen Fasern aber anzusehen, daß das Pillverhalten daraus hergestellter Gewebe nicht zufriedenstellt.
Bekannt ist, daß man das Pilling bei synthetischen linearen Polyestern durch eine Modifizierung mit Si-O-C-Gruppen enthaltenden Komponenten positiv beeinflussen kann. Beispiele für solche Modifizierungen sind u.a. beschrieben in den DE-C-1 237 727, 1 720 647 oder 4 111 066. Derartige Modifizierungskomponenten bewirken zum einen eine für das Spinnverhalten wichtige, im Vergleich zu einem Polyester gleicher Lösungsviskosität deutliche Erhöhung der Schmelzviskosität und zum anderen die Möglichkeit durch hydrolytische Spaltung von Si-O-C-Bindungen an dem fertigen Textil die gewünschte Antipillwirkung zu erzielen.

Versucht man nun synthetische lineare Polyester nach DE-C-1 720 647 mit dem Trimethoxysilanphosphonsäurediäthylester und nach DE-C-2 346 787 mit der 2-Carboxyethyl-methylphophinsäure gleichzeitig zu modifizieren, um durch eine einfache Kombination beider Komponenten einen Rohstoff für eine pillarme und schwerentflammbare Faser zu erhalten, so scheitert das Vorhaben, weil die für die Antipillwirkung notwendigen Si-O-C-Bindungen schon durch die dem Spinnen vorgeschaltete Trocknung unter gleichzeitiger Verminderung der für das Spinn- und Streckverhalten wichtigen Schmelzviskosität brechen und für die anschließende Antipillbehandlung nicht mehr zur Verfügung stehen. Die gleiche Erfahrung macht man, wenn anstelle des Trimethoxysilanphosphonsäurediäthylesters ein Tetra-alkylorthosilikat verwendet wird.
Auch die in der US-A-5,180,793 beschriebene Verspinnung einer Rohstoffmischung, bei der jede der einzelnen Komponenten separat polykondensiert und dann in Mischung versponnen wird, hat bisher nicht zu einer technischen Realisierung geführt, weil sie einerseits aufwendiger ist als die Herstellung eines einzigen modifizierten Polyesters und es sich andererseits gezeigt hat, daß sich durch die dort offenbarten Modifizierungsmittel die von Haus aus schon vorhandene Hydrolyseempfindlichkeit der Grundkomponenten noch einmal drastisch erhöht, was einen aufwendigen Verarbeitungsprozeß unumgänglich macht.

Es war daher wünschenswert und es bestand die Aufgabe, nach Möglichkeiten zu suchen, eine schwerentflammbare PET-Faser mit guten Pilleigenschaften herzustellen.
Diese Aufgabe wurde durch die vorliegende Erfindung gelöst. Überaschenderweise wurde gefunden, daß die Herstellung pillarmer, schwerentflammbarer Fasern möglich wird, wenn man als Faserrohstoff Mischungen von spinnbaren Polyestern einsetzt, die mit speziellen Phosphor- bzw. Siliziumverbindungen modifiziert sind.
Ein Gegenstand der vorliegenden Erfindung ist eine solche pillarme und schwer entflammbare Phosphor und Silizium enthaltende Polyester-Mischung die dadurch gekennzeichnet ist, daß sie
zu 10 bis 90 Gew.-% aus einem phosphorhaltigen Polyester A,
zu 90 bis 10 Gew.-% aus einem siliziumhaltigen Polyester B und
zu 0 bis 80 Gew.-% aus einem unmodifizierten Polyester C besteht,
daß der Polyester A ein linearer, faserbildender Polyester, aus Dicarbonsäure- und Diolkomponenten ist, der in seiner Polymerkette Modifizierungsbausteine enthält, die durch Umesterungs- oder Veresterungsreaktionen aus Verbindungen der Formel I entstehen, 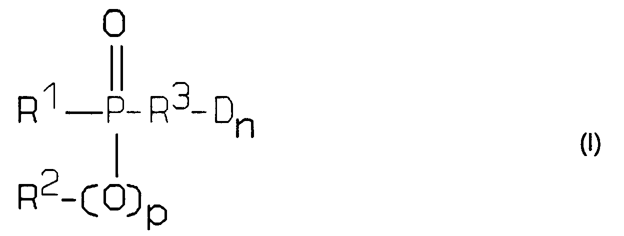
daß der Polyester B ein linearer, faserbildender Polyester, aus Dicarbonsäure- und Diolkomponenten ist, der in seiner Polymerkette Modifizierungsbausteine enthält, die durch Umesterungs- oder Veresterungsreaktionen aus Verbindungen der Formeln II und/oder III entstehen, 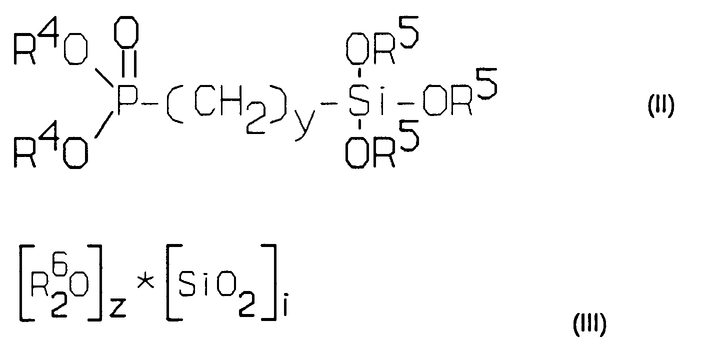
daß der Polyester C ein linearer, faserbildender Polyester, aus Dicarbonsäure- und Diolkomponenten ist, der frei ist von Modifizierungsbausteinen, die durch Umesterungs- oder Veresterungsreaktionen aus Verbindungen der Formeln I, II oder III entstehen,
wobei in den Formeln I, II und III
R¹ und R² gleich oder verschieden und jeweils einen einbindigen aliphatischen, araliphatischen oder aromatischen Kohlenwasserstoffrest mit 1 bis 12 C-Atomen oder
R¹ und R² gemeinsam einen zweibindigen aliphatischen, araliphatischen oder aromatischen Rest bedeuten,
R³ für einen (n + 1)-valenten organischen Rest steht,
D für eine zur Esterbildung befähigte Gruppe, n für eine der ganzen Zahlen 1 bis 3 und p für 0 oder 1 stehen,
R⁴ und R⁵ gleich oder verschieden sind und jeweils Wasserstoff oder einen einbindigen aliphatischen, araliphatischen oder aromatischen Kohlenwasserstoffrest mit 1 bis 12 C-Atomen bedeuten,
y eine ganze Zahl von 1 bis 10 ist,
R⁶ Wasserstoff oder einen einbindigen aliphatischen, araliphatischen oder aromatischen Kohlenwasserstoffrest mit 1 bis 12 C-Atomen bedeutet und der Index z 0 oder eine ganze Zahl von t bis 2*i und der Index i eine ausreichend kleine ganze Zahl ist.

Es ist bekannt, daß in Mischungen von Polyesterschmelzen Umesterungsreaktionen ablaufen, deren Ausmaß in bekannter Weise von der Anwesenheit von Spuren katalytisch wirkender Verbindungen, wie z.B. Schwermetallverbindungen, und Substituenten, wie z.B. Säuregruppen, und der Temperatur und -Dauer der Schmelzebehandlung abhängt.
Die bei dieser Umesterung der erfindungsgemäßen Polyestermischungen entstehende Produkte sind ebenfalls Polyester, in denen einzelne Bausteine oder Bausteinblöcke der Polyester A und B enthalten sein können.
Selbstverständlich sind auch erfindungsgemäße Polyestermischungen, die derartige Umesterungsprodukte enthalten, Gegenstand der Erfindung.

Bevorzugt sind erfindungsgemäße Polyester-Mischungen die
zu 20 bis 80 Gew.-% insbesondere zu 40 bis 60 Gew.-% aus einem phosphorhaltigen Polyester A,
zu 80 bis 20 Gew.-% insbesondere zu 60 bis 40 Gew.-% aus einem siliziumhaltigen Polyester B und
zu 0 bis 60 Gew.-% insbesondere zu 0 bis 20 Gew.-% aus einem unmodifizierten Polyester C bestehen.

Die Anteile der Modifizierungsbausteine in den Polyesterketten der Polyester A bzw. B sind so bemessen, daß der Phosphorgehalt der erfindungsgemäßen Polyestermischung vorzugsweise 0,1 bis 2,5, insbesondere 0,3 bis 1,5 Gew.-%, der Siliziumgehalt vorzugsweise 0,01 bis 0,5, insbesondere 0,02 bis 0,2 Gew.-% beträgt.
Je nach dem, welcher Phophor- und Siliziumgehalt innerhalb der angegebenen Bereiche in der erfindungsgemäßen Polyestermischung enthalten sein soll, werden die Anteile von Phosphorbaugruppen bzw. Siliziumbaugruppen in den Polyestern A und B gewählt.
In der Regel können alle oben angegebenen Phospor- und Silizium- Gehalte in den Mischungen eingestellt werden, wenn der Polyester A in seiner Polymerkette 1,0 bis 40 Gew.-%, vorzugsweise 3,0 bis 25 Gew.-%, insbesondere 5 bis 20 Gew.-% Modifizierungsbausteine enthält, die durch Umesterungs- oder Veresterungsreaktionen aus Verbindungen der Formel I entstehen und wenn der Polyester B in seiner Polymerkette 0,01 bis 5,0 Gew.-%, vorzugsweise 0,02 bis 2,0 Gew.-%, insbesondere 0,05 bis 1,0 Gew.-% Modifizierungsbausteine enthält, die durch Umesterungs- oder Veresterungsreaktionen aus Verbindungen der Formel II oder III entstehen.

In der allgemeinen Formel I sind R¹ und R² gleich oder verschieden und bedeuten jeweils einen einbindigen aliphatischen, araliphatischen oder aromatischen Kohlenwasserstoffrest mit 1 bis 12, vorzugsweise 1 bis 6, C-Atomen.
Weiterhin können die Reste R¹ und R² gemeinsam einen zweibindigen aliphatischen, araliphatischen oder aromatischen Rest bilden.
Zweibindige aliphatische Reste, für die R¹ und R² gemeinsam stehen, haben 3 bis 10, vorzugsweise 3 bis 6, C-Atome, wobei die beiden zum Phosphor oder zu dem an Phosphor gebundenen Sauerstoff gerichteten Bindungen vorzugsweise in 1,3-, 1,4-, 1,5- oder 1,6-Stellung stehen.
Beispiele für derartige aliphatische Reste sind Propan-1,3-diyl, Butan-1,3- oder 1,4-diyl, Hexan-1,3-, 1,4-, 1,5- oder 1,6-diyl.

Zweibindige araliphatische oder aromatische Reste, für die R¹ und R² gemeinsam stehen, können einen Ring oder 2 bis 3 miteinander kondensierte oder nicht kondensierte aromatische Ringe haben und weisen insgesamt 7 bis 20 C-Atome, vorzugsweise 7 bis 14, insbesondere 7 bis 12 C-Atome auf.
Beispiele für solche Reste sind 1-Methylen-phen-2-yl, Naphthalin-1,8-diyl, und der bevorzugte Rest Biphenyl-2,2'-diyl.

R³ steht für einen (n + 1)-valenten organischen Rest, vorzugsweise einen (n + 1)-valenten gesättigten aliphatischen Kohlenwasserstoffrest mit 1 bis 12, vorzugsweise 1 bis 6, insbesondere 2 bis 4 C-Atomen, einen araliphatischen Kohlenwasserstoffrest mit 7 bis 16, vorzugsweise 7 bis 14, insbesondere 8 bis 14 C-Atomen oder einen aromatischen Kohlenwasserstoffrest mit 6 bis 16, vorzugsweise 6 bis 10 C-Atomen.
D steht für eine zur Esterbildung befähigte Gruppe, n für eine der ganzen Zahlen 1 bis 3, vorzugsweise 2.
Eine zur Esterbildung befähigte Gruppe im Sinne dieser Beschreibung ist vorzugsweise eine -COR⁷ - Gruppe, wobei R⁷ für -OH, -Cl, -Br oder -OR⁸ steht und R⁸ vorzugsweise einen Alkylrest, insbesondere einen unverzweigten Alkylrest mit 1 bis 6, insbesondere 1 bis 3 C-Atomen, oder einen entsprechend langen Hydroxyalkylrest bedeutet.
Im Fall, daß n den bevorzugten Wert von 2 oder den Wert 3 hat, können zwei der Reste D auch gemeinsam eine Gruppe -CO-O-CO- bilden.
Besonders bevorzugt als zur Esterbildung befähigte Gruppen sind freie Carboxylgruppen und Methoxy- oder Ethoxycarbonylgruppen.
D kann jedoch auch für eine Hydroxy- oder eine Acyloxygruppe stehen wobei der Acylrest sich vorzugsweise von einer niederen aliphatischen Carbonsäure mit insgesamt 1 bis 5, insbesondere mit 1 oder 2 C-Atomen ableitet.

Beispiele für das Strukturelement -R³-Dₙ sind 2-Carboxy-ethy-1-yl, Dicarboxymethyl, 1,1'-Dicarboxy-eth-2-yl, 1,2-Dicarboxy-eth-2-yl, 2,3-Dicarboxy-prop-1-yl, 3,5-Dicarboxy-phen-1-yl sowie die entsprechenden Niederalkylester und Anhydride.
OH-funktionelle zur Esterbildung befähigte Strukturelemente sind beispielsweise 1,4-Dihydroxy-but-3-yl oder 1,2-Di-(4-acetyloxyphenyl)-eth-2-yl.

In der allgemeinen Formel II sind R⁴ und R⁵ gleich oder verschieden und bedeuten jeweils Wasserstoff oder, bevorzugt einen einbindigen aliphatischen, araliphatischen oder aromatischen Kohlenwasserstoffrest mit 1 bis 12, vorzugsweise 1 bis 6, C-Atomen.
Auch die beiden in der Verbindung der Formel II enthaltenen Reste R⁴ können untereinander verschieden im Rahmen der oben angegebenen Definition sein.
Bevorzugt, schon aus Gründen der einfacheren Herstellung, ist es, daß die beiden Reste R⁴ gleich sind.
Das Gleiche gilt für die in der Verbindung der Formel II enthaltenen drei R⁵-Reste.
Auch diese können prinzipiell im Rahmen der obigen Definition untereinander verschieden sein, sind aber vorzugsweise gleich.
y in der Formel II ist eine ganze Zahl mit einem Wert von 1 bis 10, vorzugsweise von 2 bis 4.

In der Formel III bedeutet R⁶ Wasserstoff oder, vorzugsweise einen einbindigen aliphatischen, araliphatischen oder aromatischen Kohlenwasserstoffrest mit 1 bis 12, insbesondere 1 bis 6, C-Atomen. Beispiele für Reste R⁶ sind Methyl, Ethyl, n-, iso- oder tert-Butyl oder Octyl.
Die 2·z Reste R⁶, die in der Verbindung der Formel III enthalten sind, können untereinander verschieden im Rahmen der oben angegebenen Definition sein.
Bevorzugt, schon aus Gründen der einfacheren Herstellung, ist es, daß die Reste R⁶ gleich sind.

Der Index z in Formel III ist 0 oder eine ganze Zahl von 1 bis 2·i.
Der Index i in Formel III ist eine ganze Zahl, deren Wert wesentlich die Teilchengröße von Kolloiden der Substanz der Formel III bestimmt. Der Wert von i wird ausreichend klein eingestellt, sodaß die Teilchengröße der Substanz unter 2·10⁻⁵ mm liegt.
Substanzen der Formel III sind in der Regel für die Modifizierung der erfindungsgemäßen Polyester geeignet, wenn i im Bereich von 1 bis 20, vorzugsweise von 1 bis 5 liegt.

Beispiele für bekannte Substanzen der Formel III, die sich für die Herstellung erfindungsgemäßer Polyester eignen, sind kolloidales Siliziumdioxid, Siliziumdioxidorganosole, Kieselsäuren verschiedener Hydratationsstufen (R⁶ = Wasserstoff; z = 1; i eine Zahl von 1 bis 5) und deren Alkylester worin R⁶ dann Alkyl mit 1 bis 8, vorzugsweise 1 bis 4 C-Atomen, wie z.B. Tetraethyl-orthosilikat.
Eine bevorzugte Gruppe von Verbindungen der Formel III sind solche, bei denen das Molverhältnis z:i Werte von 2:1 bis 1:2 hat. Besonders bevorzugt sind Verbindungen mit z:i = 2:1 bis 1:1, wozu auch das oben bereits genannte Tetraethyl-orthosilikat zählt.

Aromatische Reste, für die die Symbole R¹ bis R⁵ stehen oder die in Baugruppen, für die R¹ bis R⁵ stehen, enthalten sind, können bis zu 4, vorzugsweise 0 bis 2, weitere Substituenten tragen wie z.B. Halogene, insbesondere Chlor oder Brom, oder Alkyl- oder Alkoxyreste mit 1 bis 10, vorzugsweise 1 bis 4, insbesondere 1 bis 2 C-Atomen.

Die Polyesterketten der Polyester A oder B, die die von den genannten Modifizierungsmitteln entstehenden Baugruppen enthalten, und des Polyesters C bestehen im übrigen aus den in bekannten faserbildenden Polyestern üblichen Baugruppen.

Überwiegend, d.h. zu mindestens 80 Mol.-%, bestehen sie aus Bausteinen, die sich von aromatischen Dicarbonsäuren und von aliphatischen Diolen ableiten. Gängige aromatische Dicarbonsäurebausteine leiten sich von Benzoldicarbonsäuren, insbesondere von der Terephthalsäure und der Isophthalsäure ab. Gängige Diole haben 2-4 C-Atome, wobei das Ethylenglycol besonders geeignet ist. Vorzugsweise enthalten die erfindungsgemäß modifizierten Polyester mindestens 80 Mol% Ethylenterephthalat-Einheiten. Die restlichen 20 Mol% bauen sich dann aus Dicarbonsäureeinheiten und/oder Glycoleinheiten auf, die als weitere Modifizierungsmittel wirken und die es dem Fachmann gestatten, die physikalischen und chemischen Eigenschaften der hergestellten Filamente gezielt zu beeinflussen.
Solche Dicarbonsäureeinheiten leiten sich beispielsweise von der Isophthalsäure oder von aliphatischen Dicarbonsäure wie z.B. Glutarsäure, Adipinsäure oder Sebazinsäure ab. Beispiele für modifizierend wirkende Diolreste sind solche von längerkettigen Diolen, z.B. von Propandiol oder Butandiol, von Di- oder Tri-ethylenglycol oder, sofern in geringer Menge vorhanden, von Polyglycol mit einem Molgewicht von ca. 500 - 2000.

Im einzelnen sind Polyester bevorzugt, deren Polymerketten aus
0 bis 100 Mol.-% Baugruppen der Formel IV 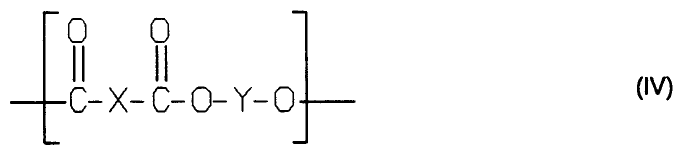
und 100 bis 0 Mol.-% Baugruppen der Formel V 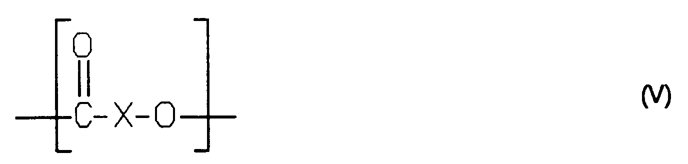
aufgebaut sind, worin
X zu mehr als 80 Mol.-% aus aromatischen Resten mit 5 bis 16, vorzugsweise 6 bis 12 C-Atomen und maximal 20 Mol.-% aus aliphatischen Resten mit 4 bis 10 Kohlenstoffatomen, vorzugsweise 6 bis 8 Kohlenstoffatomen,
Y zu mindestens 80 Mol.-% aus Alkylen- oder Polymethylengruppen mit 2 bis 4 Kohlenstoffatomen oder Cycloalkan- oder Dimethylen-cycloalkangruppen mit 6 bis 10 C-Atomen und
zu maximal 20 Mol.-% aus geradkettigen oder verzweigten Ankandiyl-Gruppen mit 4 bis 16, vorzugsweise 4 bis 8, C-Atomen oder aus
Resten der Formel -(C₂H₄-O)ₘ-C₂H₄-, worin n eine ganze Zahl von 1 bis 40 bedeutet, wobei m = 1 oder 2 für Anteile bis zu 20 Mol.-% bevorzugt sind und Gruppen mit m = 10 bis 40 vorzugsweise nur in Anteilen von unter 5 Mol.-% vorhanden sind, oder aus Resten der Formel -(CH₂)_{q}-Q-(CH₂)_{q}-,
worin
- Q: für O oder S (ein Sauerstoff- oder Schwefelatom) steht, wobei q eine ganze Zahl von 2 bis 8 bedeutet oder
- Q: Cycloalkan-diyl, oder ein ein- oder zweikerniger kondensierter oder nicht kondensierter aromatischer Rest, insbesondere Phenylen oder eine Rest der unten angegebenen Formel VI ist, wobei q eine ganze Zahl von 0 bis 8 ist, bestehen.

Zweiwertige, Ethergruppen enthaltende Reste, für die Q steht, sind solche, die sich von Diglykol, Triglykol oder Polyglykol mit einem mittleren Molekulargewicht von ca. 500 bis 2000 ableiten.

Beispiele für cycloaliphatische oder aromatische Reste, für die Q steht, sind Cyclohexan-1,4-diyl, 1,4-Dimethylen-cyclohexan, 1,3- oder 1,4-Phenylen, sowie die Reste
-Phenylen-O-Phenylen- , -Phenylen-S-Phenylen- oder
-Phenylen-SO₂-Phenylen-.

Vorzugsweise enthalten Polyester A, B und C, die Baugruppen der Formel V aufweisen, 70 bis 100 Mol.-%, insbesondere 85 bis 100 Mol.-%, Baugruppen der Formel IV und 0 bis 30 Mol.-%, insbesondere 0 bis 15 Mol.-%, Baugruppen der Formel V.

Die aromatischen Reste, für die X steht, können im Rahmen der gegebenen Definition alle gleich sein oder sie können verschieden sein.
Insbesondere können die oben genannten, von X repräsentierten Baugruppen, die zu mindestens 80 Mol.-% die Polyesterkette bilden, einzeln oder gemischt in der Polyesterkette vorliegen. Bevorzugt ist es, wenn die mindestens 80 Mol.-% der Polyesterkette von nur einem oder zwei Individuen aus der Gruppe der für diese Hauptkomponenten angegebenen Reste gebildet werden.
Eine eventuell gewünschte weitere Modifizierung der Polyesterkette erfolgt dann vorzugsweise durch andere Baugruppen im Rahmen der Definition, die für die zu maximal 20 Mol.-% vorhandenen, von X repräsentierten Baugruppen gegeben worden ist.

So können die mindestens 80 Mol.-% aromatischen Reste X beispielsweise alle 1,4-Phenylenreste sein oder sie können sich beispielsweise im Molverhältnis von 4:6 bis 6:4 aus 2,6-Naphthylenresten und Biphenyl-4,4'-diyl-Resten zusammensetzen.
Bevorzugt sind Polyester, in denen X mindestens 95 Mol.-% aromatische und maximal 5 Mol.-% aliphatische Reste bedeuten, insbesondere aber solche, in denen X ausschließlich für aromatische Reste steht.

Auch die Reste, für die Y steht, können im Rahmen der gegebenen Definition alle gleich sein, oder sie können verschieden sein.
Insbesondere können die oben genannten, von Y repräsentierten Baugruppen, die zu mindestens 80 Mol.-% die Polyesterkette bilden, einzeln oder gemischt in der Polyesterkette vorliegen. Bevorzugt ist es, wenn die mindestens 80 Mol.-% der Polyesterkette von nur einem oder zwei Individuen aus der Gruppe der für diese Hauptkomponenten angegebenen Reste gebildet werden.
Eine eventuell gewünschte weitere Modifizierung der Polyesterkette erfolgt dann vorzugsweise durch andere Baugruppen im Rahmen der Definition, die für die zu maximal 20 Mol.-% vorhandenen, von Y repräsentierten Baugruppen gegeben worden ist.
So können die mindestens 80 Mol.-% aliphatischen Reste Y beispielsweise alle Ethylenreste sein oder sie können sich beispielsweise im Molverhältnis von 10:1 bis 1:10 aus Ethylen und 1,4-Dimethylen-cyclohexan-Resten zusammensetzen.
Besonders bevorzugt sind Polyester, in denen mindestens 95 Mol.-% der Reste Y Ethylen-Reste sind.

Bevorzugte aromatische Reste, für die X aber auch Q stehen, sind 1,4- und 1,3-Phenylen,
1,4-, 1,5-, 1,8-, 2,6- und 2,7-Naphthylen, 4,4'-Biphenylen, Furylen und Reste der Formel VI 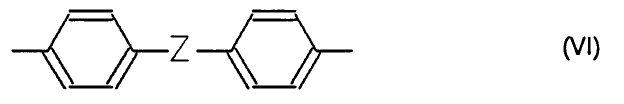
worin Z Polymethylen oder Alkylen mit 1 bis 4 Kohlenstoffatomen, -SO₂-, -COO-, -O- oder -S- bedeutet.

Die aromatischen Reste, für die X steht, können ihrerseits noch einen oder zwei Substituenten tragen. In diesem Fall ist es jedoch bevorzugt, daß nur ein Anteil von bis zu 15 %, insbesondere von bis zu 7 % der vorhandenen aromatischen Reste substituiert ist. Vorzugsweise tragen die substituierten aromatischen Reste jeweils nur einen Substituenten. Besonders geeignete Substituenten sind Alkyl mit 1 bis 4 C-Atomen, Alkoxy mit 1 bis 4 C-Atomen, Chlor und die Sulfogruppe.

Reste, die sich von aliphatischen Dicarbonsäuren ableiten, und aromatische Reste, die gewinkelte Ketten liefern, beispielsweise Isophthalsäurereste, oder die sperrigere aromatische Kerne, wie den Naphthalinkern aufweisen, sowie
die längerkettigen, für Y stehenden Baugruppen werden insbesondere dann in die Polyesterkette eingebaut, wenn eine weitere Modifizierung der Eigenschaften des Polyesters erwünscht ist.
Bevorzugt sind Polyester, die weniger als 7 % dieser modifizierend wirkenden Komponenten enthalten.

Bevorzugte Polyester A, und B, die in ihrer Kette die oben genannten Modifizierungsmittel der Formeln I, II bzw. III in den angegebenen Mengen enthalten, und bevorzugte Polyester C sind solche, die Ethylenterephthalatbausteine der Formel VII 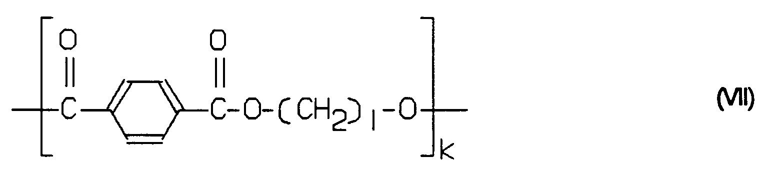
worin l eine Zahl von 2 bis 6 und k eine Zahl über 10 ist,
und zusätzlich bis zu 10 Mol.-% anderer Bausteine aus den oben genannten Gruppen aufweisen und dadurch so modifiziert worden sind, daß bestimmte Gebrauchseigenschaften erhalten werden. Als Beispiel für solche bevorzugten Polyester A und B sei genannt Polyethylenterephthalat, das durch Einbau von Sulfogruppen enthaltenden Bausteinen (z.B. Sulfo-isophthalsäure) eine Affinität zu basischen Farbstoffen aufweist und durch Einbau der oben genannten Modifizierungsmittel der Formeln I bis III erfindungsgemäß pillarm und schwerentflammbar modifiziert worden ist.

Zweckmäßigerweise haben die erfindungsgemäß zu mischenden Polyester A, B und C eine relative Viskosität von 1,2 bis 1,9, vorzugsweise von 1,4 bis 1,8, gemessen in einer 1 gew.-%igen Lösung der Polyester in einer Mischung von o- und m-Kresol im Gewichtsverhältnis 10:1 bei 25°C.

Ein weiterer Gegenstand der Erfindung ist ein Verfahren zur Herstellung der erfindungsgemäßen linearen faserbildenden Polyester.
Bei diesem Verfahren werden zunächst in an sich bekannter Weise Polyester A, B und C getrennt hergestellt indem Dicarbonsäuren der Formel IVa und/oder Hydroxycarbonsäuren der Formel Va

HOOC-X-COOH (IVa) ; HOOC-X-OH (Va)

worin X die oben angegebenen Bedeutungen hat, oder deren niedere (vor allem C 1 bis C 4-) Alkylester, wie z.B. Terephthalsäure oder Dimethylterephthalat, mit Diolen der Formel IVb

HO-Y-OH (IVb),

worin Y die oben angegebenen Bedeutungen hat, wie z.B. Ethylenglykol,
durch Direktveresterung bzw. Umesterung zur Reaktion gebracht werden, wobei zur Herstellung des Polyesters A unter Zusatz von Verbindungen der oben angegebenen Formel I,
zur Herstellung des Polyesters B unter Zusatz von Verbindungen der oben angegebenen Formeln II oder III
und zur Herstellung des Polyesters C ohne Zusatz von Verbindungen der oben angegebenen Formeln I,II oder III gearbeitet wird,
und die Produkte dann auf bekannte Weise zu den Polyestern A, B bzw. C polykondensiert werden.
Anschließend werden
10 bis 90 Gew.-% des phosphorhaltigen Polyesters A,
90 bis 10 Gew.-% des siliziumhaltigen Polyesters B
und 0 bis 80 Gew.-% des unmodifizierten Polyesters C miteinander gemischt.
Vorzugsweise werden Mischungen hergestellt aus
20 bis 80 Gew.-% des phosphorhaltigen Polyesters A,
80 bis 20 Gew.-% des siliziumhaltigen Polyesters B
und 0 bis 60 Gew.-% des unmodifizierten Polyesters C,
insbesondere aus
40 bis 60 Gew.-% des phosphorhaltigen Polyesters A,
60 bis 40 Gew.-% des siliziumhaltigen Polyesters B
und 0 bis 20 Gew.-% des unmodifizierten Polyesters C.

Bei der Herstellung der Polyester A werden 1,0 bis 40 Gew.-%, vorzugsweise 3,0 bis 25 Gew.-%, insbesondere 5 bis 20 Gew.-% von mindestens einer der Verbindungen der Formel I zugesetzt,
bei der Herstellung der Polyester B werden 0,01 bis 5,0 Gew.-%, vorzugsweise 0,02 bis 2,0 Gew.-%, insbesondere 0,05 bis 1,0 Gew.-% von Verbindungen der Formeln II oder III zugesetzt.

Der Zusatz der Verbindungen I bzw. II oder III und die anschließende Mischung der Polyester erfolgt in einer solchen Menge und in einem solchen Mischungsverhältnis, daß der Phosphorgehalt der erfindungsgemäßen Polyestermischung vorzugsweise 0,1 bis 2,5, insbesondere 0,3 bis 1,5 Gew.-% und der Siliziumgehalt vorzugsweise 0,01 bis 0,5, insbesondere 0,02 bis 0,2 Gew.-% beträgt.

Bei der Durchführung des erfindungsgemäßen Verfahrens werden die gleichen Reaktionsbedingungen angewandt wie bei der Herstellung der entsprechenden unmodifizierten faser- und filmbildenden linearen Polyester. Es werden Dicarbonsäuren oder deren niedere (vor allem C 1 bis C 4-) Alkylester wie Terephthalsäure oder Dimethylterephthalat mit Diolen wie Ethylenglykol durch Direktveresterung bzw. Umesterung zur Reaktion gebracht und das Produkt dann auf bekannte Weise polykondensiert.

Gemäß den obigen Definitionen von X und Y kommen außer Terephthalsäure auch andere zur Herstellung faser- und filmbildender Polyester geeignete Dicarbonsäuren oder Oxycarbonsäuren für die Herstellung der erfindungsgemäßen Polyester in Frage; beispielhaft seien genannt: Isophthalsäure, 2,6-Naphthalindicarbonsäure, 4,4-'Diphenyldicarbonsäure, 4,4'-Diphenylsulfondicarbonsäure, p-Hydroxybenzoesäure. Die Dicarbonsäuren können allein oder ggf. in Mischung mit bis zu 20 Molprozent einer anderen aromatischen, aliphatischen oder cycloaliphatischen Dicarbon- oder Oxycarbonsäure wie z.B. die oben aufgeführten, Adipinsäure oder Sebacinsäure zur Anwendung kommen, bevorzugt ist die alleinige Verwendung von Terephthalsäure.

Als Diole können außer Ethylenglykol auch solche der Formel HO(CH₂)_{q}-Q-(CH₂)_{q}OH verwendet werden, wobei q und Q die oben definierten Bedeutungen haben. Als zur Herstellung der erfindungsgemäßen Polyester einsetzbaren Diole seien in beispielhafter Weise aufgeführt: 1,3-Propandiol, 1,4-Butandiol, 1,4-Cylcohexandimethanol, Diethylenglykol, Dihydroxy-diphenylether, Dihydroxy-diphenylsulfon. Die Diole können allein oder in Kombination miteinander eingesetzt werden. Bevorzugt ist allerdings die Verwendung von mindestens 80 Mol.-% Ethylenglykol.

Für die Direktveresterung bzw. die Umesterung und die Polykondensation werden übliche Katalysatoren wie z.B. Manganacetat, Zinkacetat, Sb₂O₃, GeO₂, oder Titansäureester eingesetzt.
Selbstverständlich können bei dem erfindungsgemäßen Verfahren neben den gängigen Katalysatoren auch alle üblichen Zusatzstoffe (wie z.B. Vernetzungs- Mattierungs, Stabilisierungsmittel, Farb- und Füllstoffe etc.) beigefügt werden.

Sowohl bei dem Veresterungsverfahren als auch bei dem Umesterungsverfahren kann der Zusatz der Phosphorverbindungen vor oder nach der Veresterungs- bzw. Umesterungsstufe erfolgen. Bei dem Umesterungsverfahren wird der Zusatz der Phosphorverbindungen in Form freier Dicarbonsäuren nach der Umesterungsstufe bevorzugt, weil bei Verwendung der entsprechenden Dicarbonsäureester eine deutliche Verlangsamung der Umesterungsreaktion verzeichnet wird.
Die Zugabe der Si-O-C-Bindungen enthaltenden Produkte wird beim Veresterungsverfahren zweckmäßigerweise während des Abtriebs von überschüssigem Glykol vorgenommen. Beim Umesterungsverfahren ist eine Zugabe vor oder nach der Umesterung möglich.

Die Erfindung besteht somit in der Herstellung von pillarmen und schwerentflammbaren Polyester-Rohstoffen, die durch Mischung von synthetischen linearen Polyestern, die mit einer Phosphorverbindung der allgemeinen Formel (I) modifiziert sind, mit synthetischen linearen Polyestern, die mit einer Si-O-C-Bindungen enthaltenden Verbindung der allgemeinen Formeln (II) oder (III) modifiziert sind, und ggf. mit Polyestern, die frei sind von Verbindungen der allgemeinen Formeln I,II und III, erhalten werden und ihrer Verarbeitung zu geformten Gebilden, insbesondere zu Fasern, unter üblichen Bedingungen.

Überraschenderweise erhält man beim Verspinnen der erfindungsgemäßen Mischungemn modifizierter Polyester Fasermaterialien, die pillarm und gleichzeitig schwer entflammbar sind.
Dies ist vermutlich darauf zurückzuführen, daß bei der Auswahl der oben definierten Polyesterzusammensetzung die Si-O-C-Bindungen bei der Verarbeitung des Polyesterrohstoffs erhalten bleiben und an der fertigen Faser durch eine Hydrolysebehandlung gespalten werden können. Dadurch werden die erfindungsgemäßen synthetischen schwerentflammbaren Polyesterfasern erhalten, die ein gutes Pillverhalten aufweisen.

Die Erfindung betrifft auch geformte Gebilde aus den erfindungsgemäßen Polyestermischungen, die durch Schmelzextrusion hergestellt werden. Derartige geformte Gebilde sind Formkörper, Folien, vor allem aber Fasermaterialien, insbesondere solchen für den textilen Einsatz.
Als Fasermaterialien im weiteren Sinn sind auch Pulpen zu verstehen, die durch andere als Extrusionsverfahren, z.B. durch Schleuderverfahren erhalten werden.
Bevorzugte Fasermaterialien sind aber die durch bekannte Spinnverfahren erhaltenen. Diese Fasermaterialien können in Form von Endlosfasern (Filamenten) oder Stapelfasern und in allen daraus folgenden Verarbeitungszuständen, wie z.B. Filamentgarnen, Tau, Sliver, Flocke, Stapelfasergarn vorliegen und die Fasern bzw. Filamente können hoch- oder niederorientiert, verstreckt oder unverstreckt und texturiert oder glatt sein.
Die Fasertiter liegen für den bevorzugten textilen Einsatz im Bereich von 0,5 bis 15, vorzugsweise 0,5 bis 7 dtex, können aber für spezielle Aufgaben, z.B. für Verstärkungs- oder Versteifungsaufgaben auch erheblich über 15 dtex liegen, z.B. in den Titerbereich der sog. Drähte fallen.
Wie üblich können die verschiedenen Orientierungszustände und damit verbunden die Festigkeit und die Reißdehnung der Fasermaterialien in an sich bekannter Weise durch Wahl der Spinngeschwindigkeit und der eventuell nachgeschalteten Verstreckung dem geplanten Verwendungszweck angepaßt werden.
Die Texturierung kann wie üblich z.B. durch Stauchkammerkräuselung durch Lufttexturierung in Blasdüsen, durch das Falschdrahtverfahren oder durch kombinierte Strecktexturierung erfolgen.
In Garnen und Garnerzeugnissen wie Geweben, Gewirken oder Gestricken sowie in Fasermaterialien wie z.B. Vliesen können die erfindungsgemäßen Fasern in reiner Form vorliegen oder soweit mit anderen bekannten Fasern abgemischt sein, daß die Gegenstände noch eine aus den erfindungsgemäßen Fasermaterialien resultierende, signifikante Verbesserung des Pill- und Brandverhaltens haben.

## Patentansprüche

1. Pillarme und schwer entflammbare Phosphor und Silizium enthaltende Polyester-Mischung dadurch gekennzeichnet, daß sie
zu 10 bis 90 Gew.-% aus einem phosphorhaltigen Polyester A,
zu 90 bis 10 Gew.-% aus einem siliziumhaltigen Polyester B und
zu 0 bis 80 Gew.-% aus einem unmodifizierten Polyester C besteht,
daß der Polyester A ein linearer, faserbildender Polyester, aus Dicarbonsäure- und Diolkomponenten ist, der in seiner Polymerkette Modifizierungsbausteine enthält, die durch Umesterungs- oder Veresterungsreaktionen aus Verbindungen der Formel I entstehen, 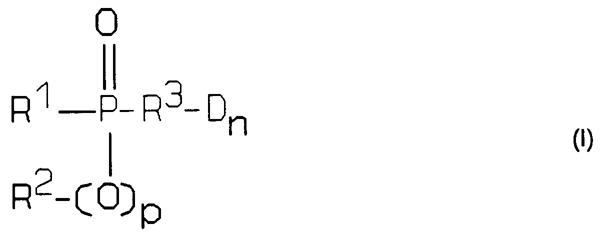 daß der Polyester B ein linearer, faserbildender Polyester, aus Dicarbonsäure- und Diolkomponenten ist, der in seiner Polymerkette Modifizierungsbausteine enthält, die durch Umesterungs- oder Veresterungsreaktionen aus Verbindungen der Formeln II und/oder III entstehen, 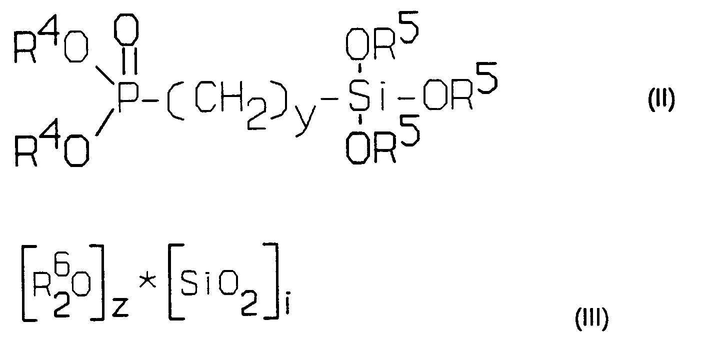 daß der Polyester C ein linearer, faserbildender Polyester, aus Dicarbonsäure- und Diolkomponenten ist, der frei ist von Modifizierungsbausteinen, die durch Umesterungs- oder Veresterungsreaktionen aus Verbindungen der Formeln I, II oder III entstehen,
wobei in den Formeln I, II und III
R¹ und R² gleich oder verschieden und jeweils einen einbindigen aliphatischen, araliphatischen oder aromatischen Kohlenwasserstoffrest mit 1 bis 12 C-Atomen oder
R¹ und R² gemeinsam einen zweibindigen aliphatischen, araliphatischen oder aromatischen Rest bedeuten,
R³ für einen (n + 1)-valenten organischen Rest steht,
D für eine zur Esterbildung befähigte Gruppe, n für eine der ganzen Zahlen 1 bis 3 und p für 0 oder 1 stehen,
R⁴ und R⁵ gleich oder verschieden sind und jeweils Wasserstoff oder einen einbindigen aliphatischen, araliphatischen oder aromatischen Kohlenwasserstoffrest mit 1 bis 12 C-Atomen bedeuten,
y eine ganze Zahl von 1 bis 10 ist,
R⁶ Wasserstoff oder einen einbindigen aliphatischen, araliphatischen oder aromatischen Kohlenwasserstoffrest mit 1 bis 12 C-Atomen bedeutet und der Index z 0 oder eine ganze Zahl von 1 bis 2*i und der Index i eine ausreichend kleine ganze Zahl ist.

2. Polyester-Mischung gemäß Anspruch 1, dadurch gekennzeichnet, daß sie
zu 20 bis 80 Gew.-% aus einem phosphorhaltigen Polyester A,
zu 80 bis 20 Gew.-% aus einem siliziumhaltigen Polyester B und
zu 0 bis 60 Gew.-% aus einem unmodifizierten Polyester C besteht.

3. Polyester-Mischung gemäß mindestens einem der Ansprüche 1 und 2, dadurch gekennzeichnet, daß sie
zu 40 bis 60 Gew.-% aus einem phosphorhaltigen Polyester A,
zu 60 bis 40 Gew.-% aus einem siliziumhaltigen Polyester B und
zu 0 bis 20 Gew.-% aus einem unmodifizierten Polyester C besteht.

4. Polyester-Mischung gemäß mindestens einem der Ansprüche 1 bis 3 dadurch gekennzeichnet, daß der Polyester A in seiner Polymerkette 1,0 bis 40 Gew.-%, vorzugsweise 3,0 bis 25 Gew.-%, insbesondere 5,0 bis 20 Gew.-% Modifizierungsbausteine enthält, die durch Umesterungs- oder Veresterungsreaktionen aus Verbindungen der Formel I entstehen.

5. Polyester-Mischung gemäß mindestens einem der Ansprüche 1 bis 4 dadurch gekennzeichnet, daß der Polyester B in seiner Polymerkette 0,01 bis 5,0 Gew.-%, vorzugsweise 0,02 bis 2,0 Gew.-%, insbesondere 0,05 bis 1,0 Gew.-% Modifizierungsbausteine enthält, die durch Umesterungs- oder Veresterungsreaktionen aus Verbindungen der Formel II oder III entstehen.

6. Polyester-Mischung gemäß mindestens einem der Ansprüche 1 bis 5, dadurch gekennzeichnet, daß die Phosphorverbindungen entsprechend den Formeln I in solchen Mengen eingesetzt werden, daß die Polyester-Mischung einen Phosphorgehalt von etwa 0,1 bis 2,5 Gewichtsprozent aufweist.

7. Polyester-Mischung gemäß mindestens einem der Ansprüche 1 bis 6, dadurch gekennzeichnet, daß die Menge der Siliziumverbindungen entspr. Formeln II oder III so bemessen ist, daß die Polyester-Mischung 0,01 bis 0,5 Gewichtsprozent Silizium enthält.

8. Polyester-Mischung gemäß mindestens einem der Ansprüche 1 bis 7, dadurch gekennzeichnet, daß die Ketten der Polyester A, B und C überwiegend aus Bausteinen, die sich von aromatischen Dicarbonsäuren und von aliphatischen Diolen ableiten, besteht und zu maximal 20 Mol% aus Dicarbonsäureeinheiten und Glycoleinheiten, die als sogenannte Modifizierungsmittel wirken, und die es dem Fachmann gestatten, die physikalischen und chemischen Eigenschaften der hergestellten Filamente gezielt zu beeinflussen.

9. Polyester-Mischung gemäß mindestens einem der Ansprüche 1 bis 8, dadurch gekennzeichnet, daß die Polymerketten der Polyester A, B und C aus 0 bis 100 Mol.-% Baugruppen der Formel IV 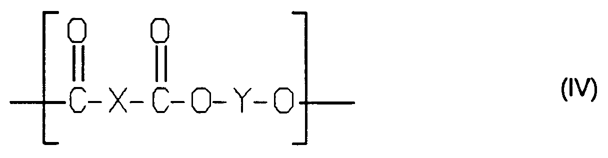 und 100 bis 0 Mol.-% Baugruppen der Formel V 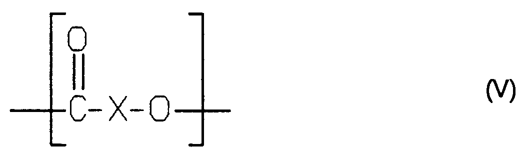 aufgebaut sind, worin
X zu mehr als 80 Mol.-% aromatische Reste mit 5 bis 16, vorzugsweise 6 bis 12 C-Atomen und maximal 20 Mol.-% aliphatische Reste mit 4 bis 10 Kohlenstoffatomen, vorzugsweise 6 bis 8 Kohlenstoffatomen,
Y zu mindestens 80 Mol.-% Alkylen- oder Polymethylengruppen mit 2 bis 4 Kohlenstoffatomen oder Cycloalkan- oder Dimethylen-cycloalkangruppen mit 6 bis 10 C-Atomen und
zu maximal 20 Mol.-% geradkettiges oder verzweigtes Ankandiyl mit 4 bis 16, vorzugsweise 4 bis 8, C-Atomen
oder Reste der Formel -(C₂H₄-O)ₘ-C₂H₄-, worin n eine ganze Zahl von 1 bis 40 bedeutet, wobei m = 1 oder 2 für Anteile bis zu 20 Mol.-% bevorzugt sind und Gruppen mit m = 10 bis 40 vorzugsweise nur in Anteilen von unter 5 Mol.-% vorhanden sind,
oder Reste der Formel -(CH₂)_{q}-Q-(CH₂)_{q}- sind,
worin
Q für O oder S (ein Sauerstoff- oder Schwefelatom) steht, wobei q eine ganze Zahl von 2 bis 8 bedeutet oder
Q Cycloalkan-diyl, oder ein ein- oder zweikerniger kondensierter oder nicht kondensierter aromatischer Rest, insbesondere Penylen oder eine Rest der unten angegebenen Formel VI ist, wobei q eine ganze Zahl von 0 bis 8 ist.

10. Polyester-Mischung gemäß mindestens einem der Ansprüche 1 bis 9, dadurch gekennzeichnet, daß die Dicarbonsäureeinheiten der Ester A, B und C im wesentlichen Einheiten der Terephthalsäure und die Dioleinheiten im wesentlichen Einheiten des Ethylenglykols sind.

11. Verfahren zur Herstellung der Polyester-Mischung des Anspruchs 1, wobei zunächst in an sich bekannter Weise Polyester A, B und C hergestellt werden indem Dicarbonsäuren und/oder Hydroxycarbonsäuren der Formeln IVa und/oder Va
HOOC-X-COOH (IVa) ; HOOC-X-OH (Va)
worin X die in Anspruch 1 angegebenen Bedeutungen hat, oder deren niedere Alkylester mit Diolen der Formel IVb
HO-Y-OH (IVb),
worin Y die in Anspruch 1 angegebenen Bedeutungen hat,
durch Direktveresterung bzw. Umesterung zur Reaktion gebracht werden,
wobei zur Herstellung des Polyesters A unter Zusatz von Verbindungen der oben angegebenen Verbindungen der Formeln I,
zur Herstellung des Polyesters B unter Zusatz von Verbindungen der oben angegebenen Verbindungen der Formeln II oder III,
zur Herstellung des Polyesters C ohne Zusatz von Verbindungen der oben angegebenen Verbindungen der Formeln I,II oder III gearbeitet wird,
die Produkte dann auf bekannte Weise zu den Polyestern A, B bzw C polykondensiert und anschließend
10 bis 90 Gew.-% des phosphorhaltigen Polyesters A,
90 bis 10 Gew.-% des siliziumhaltigen Polyesters B
und 0 bis 80 Gew.-% des unmodifizierten Polyesters C miteinander gemischt werden.

12. Verfahren gemäß Anspruch 11, dadurch gekennzeichnet, daß
20 bis 80 Gew.-% des phosphorhaltigen Polyesters A,
80 bis 20 Gew.-% des siliziumhaltigen Polyesters B und 0 bis 60 Gew.-% des unmodifizierten Polyester C gemischt werden.

13. Verfahren gemäß mindestens einem der Ansprüche 11 und 12, dadurch gekennzeichnet, daß
40 bis 60 Gew.-% des phosphorhaltigen Polyesters A,
60 bis 40 Gew.-% des siliziumhaltigen Polyesters B und 0 bis 20 Gew.-% des unmodifizierten Polyester C gemischt werden.

14. Verfahren gemäß mindestens einem der Ansprüche 11 bis 13, dadurch gekennzeichnet, daß bei der Herstellung des Polyesters A 1,0 bis 40 Gew.-%, vorzugsweise 3,0 bis 25 Gew.-%, von der Verbindung der Formel I zugesetzt werden.

15. Verfahren gemäß mindestens einem der Ansprüche 11 bis 14, dadurch gekennzeichnet, daß bei der Herstellung des Polyesters B 0,01 bis 5,0 Gew.-%, vorzugsweise 0,02 bis 2,0 Gew.-%, von der Verbindung der Formel II oder III zugesetzt werden.

16. Verfahren gemäß mindestens einem der Ansprüche 11 bis 14, d1adurch gekennzeichnet, daß der Zusatz der Verbindungen I bzw. II oder III und die anschließende Mischung der Polyester in einer solchen Menge und in einem solchen Mischungsverhältnis erfolgt, daß der Phosphorgehalt der erfindungsgemäßen Polyestermischung 0,1 bis 2,5, vorzugsweise 0,3 bis 1,5 Gew.-%, und der Siliziumgehalt 0,01 bis 0,5, vorzugsweise 0,02 bis 0,2 Gew.-% beträgt.

17. Verfahren gemäß mindestens einem der Ansprüche 11 bis 16, dadurch gekennzeichnet, daß bei dem Umesterungsverfahren die Phophorverbindungen der Formel I bevorzugt als freie Dicarbonsäuren nach der Umesterung eingesetzt werden.

18. Verfahren gemäß mindestens einem der Ansprüche 11 bis 17, dadurch gekennzeichnet, daß die Siliciumverbindungen der Formeln II oder III bei dem Veresterungsverfahren bevorzugt während des Abtriebs von überschüssigem Glykol zugesetzt werden.

19. Formkörper, dadurch gekennzeichnet, daß sie aus den Polyester-Mischungen des Anspruchs 1 durch Verpressen, Spritzguß oder Extrusion hergestellt sind.

20. Fasern, dadurch gekennzeichnet, daß sie aus den Polyester-Mischungen des Anspruchs 1 durch Extrusion hergestellt sind.

21. Textile Artikel, dadurch gekennzeichnet, daß sie aus den Fasern des Anspruchs 20 hergestellt sind.
